# EUROPÄISCHE PATENTSCHRIFT

(11) **EP 4 493 358 B1**
(45) Veröffentlichungstag und Bekanntmachung des Hinweises auf die Patenterteilung: **03.12.2025**
(21) Anmeldenummer: 22716865.5
(22) Anmeldetag: 17.03.2022
(51) Int. Cl.: B25J 9/04, B25J 9/10, B25J 18/00

(54) **ROBOTERARM**
ROBOT ARM
BRAS DE ROBOT

(43) Veröffentlichungstag der Anmeldung: 22.01.2025
(73) Patentinhaber: KUKA Deutschland GmbH, 86165 Augsburg (DE)
(72) Erfinder: KRUMBACHER, Rainer, 87675 Rettenbach a. A. (DE); EISENWINTER, Leander Stefan, 86647 Buttenwiesen-Lauterbach (DE); KLAFFENBACH, Oliver, 86163 Augsburg (DE); FREIBURGER, Jan, 86153 Augsburg (DE)
(74) Vertreter: Oelke, Jochen
(86) Internationale Anmeldenummer: PCT/EP2022/057065
(87) Internationale Veröffentlichungsnummer: WO 2023/174548

(56) Entgegenhaltungen:
- EP-A1- 3 189 946
- WO-A1-2013/104417
- DE-A1- 102018 107 142
- JP-A- 2009 113 188
- US-A- 5 375 480

## Beschreibung

Die Erfindung betrifft einen Roboterarm, aufweisend die Konfiguration des Roboterarms bestimmende mehrere Konfigurationsgelenke, ein Grundgestell, ein am Grundgestell mittels eines ersten Gelenks der Konfigurationsgelenke um eine erste Drehachse drehbar gelagertes Karussell, ein an dem Karussell mittels eines zweiten Gelenks der Konfigurationsgelenke um eine zweite Drehachse schwenkbar gelagerte Schwinge und einen an der Schwinge mittels eines dritten Gelenks der Konfigurationsgelenke um eine dritte Drehachse schwenkbar gelagerten Armausleger.

Die EP 3 189 946 A1 beschreibt einen Industrieroboter mit einer Gestell, einem Karussell, das in Bezug auf das Gestell um eine erste Achse drehbar ist, eine Schwinge, die in Bezug auf das Karussell um eine zweite Achse schwenkbar ist, und einen oberen Arm, der in Bezug auf die Schwinge um eine dritte Achse drehbar ist. Die Schwinge umfasst einen ersten Zweig und einen zweiten Zweig. Es gibt eine erste Lageranordnung zwischen dem Karussell und dem ersten Zweig, eine zweite Lageranordnung zwischen dem ersten Zweig und dem oberen Arm, eine dritte Lageranordnung zwischen dem Karussell und dem zweiten Zweig, und eine vierte Lageranordnung zwischen dem zweiten Zweig und dem oberen Arm. Der Roboter ist so konfiguriert, dass er auch ohne den zweiten Zweig voll funktionsfähig ist, obwohl die Präzision des Roboters verbessert wird, wenn der zweite Zweig vorhanden ist. Der zweite Zweig ist somit optional und die Präzision des Roboters kann bei Bedarf verbessert werden, während die bestehenden Lageranordnungen des Roboters intakt bleiben.

Die DE 10 2018 107142 A1 offenbart einen Roboterarm, der eine Schwinge mit zwei Schwingenkoppelstangen aufweist.

Aufgabe der Erfindung ist es, einen Roboterarm zu schaffen, dessen dynamischen Eigenschaften verbessert sind.

Die Aufgabe wird gelöst durch einen Roboterarm, aufweisend die Konfiguration des Roboterarms bestimmende mehrere Konfigurationsgelenke, ein Grundgestell, ein am Grundgestell mittels eines ersten Gelenks der Konfigurationsgelenke um eine erste Drehachse drehbar gelagertes Karussell, ein an dem Karussell mittels eines zweiten Gelenks der Konfigurationsgelenke um eine zweite Drehachse schwenkbar gelagerte Schwinge und einen an der Schwinge mittels eines dritten Gelenks der Konfigurationsgelenke um eine dritte Drehachse schwenkbar gelagerten Armausleger, wobei die Schwinge zwei zum Positionieren des dritten Gelenks im Arbeitsraum des Roboterarms ausgebildete Schwingenkoppelstangen aufweist, wobei die erste Schwingenkoppelstange mittels eines ersten Grundlagers an dem Karussell schwenkbar gelagert ist und der Armausleger mittels eines ersten Kopflagers an der ersten Schwingenkoppelstange gelagert ist, sowie die zweite Schwingenkoppelstange mittels eines zweiten Grundlagers an dem Karussell schwenkbar gelagert ist und der Armausleger mittels eines zweiten Kopflagers an der zweiten Schwingenkoppelstange gelagert ist, und die beiden Schwingenkoppelstangen von einer gemeinsamen Antriebseinrichtung des Roboterarms schwenkbar angetrieben sind, welche gemeinsame Antriebseinrichtung die über die Schwinge zu führende Antriebsenergie zum Positionieren des dritten Gelenks im Arbeitsraum auf die beiden Schwingenkoppelstangen aufteilt, um den Armausleger relativ zum Karussell zu verstellen. Die zwei Schwingenkoppelstangen sind erfindungsgemäß mechanisch separat.

Der Roboterarm kann mittels seines Grundgestells ortsfest auf einem Boden oder verfahrbar, beispielsweise auf einem Schlitten einer Linearachse angeordnet werden. Das Karussell ist um die erste Drehachse des Roboterarms drehbar am Grundgestell gelagert. Die erste Drehachse kann beispielsweise in einer Anordnung des Roboterarms auf einem Boden, sich vertikal erstrecken. In einer solchen Anordnung kann sich die zweite Achse, um welche die Schwinge schwenkbar an dem Karussell gelagert ist, horizontal erstrecken.

Die Anzahl der Konfigurationsgelenke des Roboterarms entspricht insoweit der Anzahl der Freiheitsgrade, die der Roboterarm aufweist. In einer gängigen konstruktiven Konfiguration des Roboterarms als ein Sechsachs-Kickarmroboter wäre die Anzahl der Freiheitsgrade demgemäß sechs, und somit besitzt der Sechsachs-Kickarmroboter auch insgesamt genau sechs Konfigurationsgelenke. Jedes Konfigurationsgelenk definiert insoweit eine Achse des Roboterarms, insbesondere eine Drehachse des Roboterarms, welche die in der kinematischen Kette der Achsen bzw. Freiheitsgrade des Roboterarms in distaler Richtung nachgelagerten Glieder und Gelenke bewegt, d.h. verstellt. Jedes Konfigurationsgelenk kann jedoch konstruktiv mittels eines einzigen Gelenklagers realisiert werden oder gegebenenfalls kann jedes einzelne Konfigurationsgelenk auch mit zwei oder mehr Gelenklagern realisiert werden, die dann jedoch bezogen auf das einzelne Konfigurationsgelenk auf einer gemeinsamen (Dreh-)Achse liegen müssen.

Die Schwinge bildet dasjenige Glied des Roboterarms, welches das zweite Gelenk in der kinematischen Kette des Roboterarms mit dem dritten Gelenk in der kinematischen Kette des Roboterarms mechanisch verbindet. Die Schwinge definiert demgemäß die relative Position und die relative Lage der zweiten Drehachse, die durch das zweite Gelenk bestimmt wird, bezüglich der dritten Drehachse, die durch das dritte Gelenk bestimmt wird.

Als Schwinge wird im Rahmen der vorliegenden Erfindung das mechanische Koppelglied verstanden, welches Antriebskräfte und Antriebsmomente zum Bewegen des Armauslegers überträgt und Lastkräfte und Lastmomente, die durch das Eigengewicht des Armauslegers und eine am Armausleger angebrachte weitere Last durch den Roboterarm abzustützen sind, aufnimmt. Die weitere Last kann insbesondere ein am Flansch des Roboterarms befestigtes Werkzeug, wie beispielsweise ein Greifer sein, und gegebenenfalls ein von dem Greifer erfasstes Objekt, und/oder eine am Armausleger entlanggeführt bzw. gelagerte Energiezuführungsvorrichtung.

Die beiden erfindungsgemäßen Schwingenkoppelstangen bilden insoweit ein Paar von Koppelstangen, die zusammengenommen das mechanische Koppelglied des Roboterarms bildet, welches das zweite Konfigurationsgelenk mit dem dritten Konfigurationsgelenk verbindet. Die beiden Schwingenkoppelstangen sind also ausgebildet und eingerichtet die Antriebskräfte und Antriebsmomente zum Bewegen des Armauslegers zu übertragen und Lastkräfte und Lastmomente, die durch das Eigengewicht des Armauslegers und eine am Armausleger angebrachte weitere Last durch den Roboterarm abzustützen sind, aufzunehmen. Die dazu erforderliche Antriebsenergie wird sowohl über die erste Schwingenkoppelstange als auch über die zweite Schwingenkoppelstange geleitet.

Die erste Schwingenkoppelstange und die zweite Schwingenkoppelstange sind konstruktiv voneinander unabhängig ausgebildet. Dies bedeutet, dass die in die erste Schwingenkoppelstange eingeleitete Antriebsenergie nicht über die zweite Schwingenkoppelstange weiterleitbar ist und umgekehrt die in die zweite Schwingenkoppelstange eingeleitete Antriebsenergie nicht über die erste Schwingenkoppelstange weiterleitbar ist. Demgemäß weisen die erste Schwingenkoppelstange und die zweite Schwingenkoppelstange keinen direkten mechanischen Verbindungsbereich auf, insbesondere keinen direkten starren Verbindungsglieder auf. Die erste Schwingenkoppelstange und die zweite Schwingenkoppelstange sind demgemäß auch nicht einteilig ausgebildet, sondern mechanisch stets separat voneinander, insbesondere zweiteilig ausgebildet.

Die erste Schwingenkoppelstange und die zweite Schwingenkoppelstange können insbesondere zur jeweiligen Übertragung gleichgroßer, oder zumindest annähernd gleichgroßer Antriebskräfte und Antriebsmomente ausgebildet sein. Die erste Schwingenkoppelstange und die zweite Schwingenkoppelstange können insbesondere identisch und/oder spiegelsymmetrisch gestaltet sein.

Das erste Grundlager und das zweite Grundlager sind Drehlager, deren beiden Drehachsen miteinander fluchten. Demgemäß schwenken die erste Schwingenkoppelstange und die zweite Schwingenkoppelstange um eine gemeinsame Drehachse der beiden Grundlager relativ zum Karussell.

Das erste Kopflager und das zweite Kopflager sind Drehlager, deren beiden Drehachsen miteinander fluchten. Demgemäß schwenkt der Armausleger um eine gemeinsame Drehachse der beiden Kopflager der Schwingenkoppelstangen relativ zu den beiden Schwingenkoppelstangen.

Die gemeinsame Antriebseinrichtung zum automatischen Schwenken der beiden Schwingenkoppelstangen kann eine oder mehrere Getriebeeinheiten aufweisen. Die eine Getriebeeinheit oder die mehreren Getriebeeinheiten können entweder von einem einzelnen Motor angetrieben sein oder alternativ von zwei oder mehr Motoren angetrieben sein. Unabhängig davon, ob die gemeinsame Antriebseinrichtung eine Getriebeeinheit oder mehrere Getriebeeinheiten aufweist und/oder die gemeinsame Antriebseinrichtung einen Motoren oder mehrere Motoren aufweist, ist die gemeinsame Antriebseinrichtung derart auszubilden und einzurichten, dass sie Antriebsenergie sowohl auf die erste Schwingenkoppelstange als auch auf die zweite Schwingenkoppelstange simultan überträgt. Die gesamte zu übertragende Antriebsenergie kann in gleichen Teilen, d.h. jeweils zu 50% auf die erste Schwingenkoppelstange und die zweite Schwingenkoppelstange aufgeteilt werden. Die gesamte zu übertragende Antriebsenergie kann gegebenenfalls aber auch in unterschiedlichen Teilen auf die erste Schwingenkoppelstange und die zweite Schwingenkoppelstange aufgeteilt werden. Sind mehrere Getriebeeinheiten vorgesehen, können diese getriebetechnisch, insbesondere mittels einer geeigneten Verzahnung, gekoppelt sein. Alternativ oder ergänzend können mehrere Motoren vorgesehen sein, die dann jedoch steuerungstechnisch gekoppelt sein können, insbesondere dann, wenn die mehrere Getriebeeinheiten nicht miteinander getriebetechnisch gekoppelt werden. Insofern können die mehreren Getriebeeinheiten über mehrere zugeordnete Motoren somit auch lediglich steuerungstechnisch gekoppelt sein.

Der Armausleger kann von einer weiteren Antriebseinrichtung des Roboterarms an der Schwinge schwenkbar angetrieben sein, welche weitere Antriebseinrichtung ihre Antriebsenergie zum Positionieren des Armauslegers auf den Armausleger überträgt, um den Armausleger relativ zur Schwinge zu verstellen.

Der Armausleger kann also für seine schwenkende Bewegung relativ zur Schwinge, in einer analogen technischen Weise angetrieben sein, wie dies erfindungsgemäß für das Antreiben der beiden Schwingenkoppelstangen vorgesehen ist, um die Schwinge relativ zum Karussell angetrieben zu bewegen.

Demgemäß kann auch die weitere Antriebseinrichtung zum automatischen Schwenken des Armauslegers eine oder mehrere Getriebeeinheiten aufweisen. Die eine Getriebeeinheit oder die mehreren Getriebeeinheiten können entweder von einem einzelnen Motor angetrieben sein oder alternativ von zwei oder mehr Motoren angetrieben sein. Unabhängig davon, ob die gemeinsame Antriebseinrichtung eine Getriebeeinheit oder mehrere Getriebeeinheiten aufweist und/oder die gemeinsame Antriebseinrichtung einen Motor oder mehrere Motoren aufweist, ist die weitere Antriebseinrichtung derart auszubilden und einzurichten, dass sie Antriebsenergie auf den Armausleger überträgt. Die gesamte zu übertragende Antriebsenergie kann in gleichen Teilen, d.h. jeweils zu 50% aufgeteilt auf zwei separaten Getriebeeinheiten und/oder Motoren bereitgestellt werden und an dem Armausleger zusammengeführt werden. Die gesamte zu übertragende Antriebsenergie kann gegebenenfalls aber auch in unterschiedlichen Teilen auf zwei separaten Getriebeeinheiten und/oder Motoren bereitgestellt werden und an dem Armausleger zusammengeführt werden. Die jeweilige einzelne Getriebeeinheit und/oder der einzelne Motor von jeweils zweien stützt sich dann jeweils entweder gegen die erste Schwingenkoppelstange oder die zweie Schwingenkoppelstange ab.

Sind mehrere Getriebeeinheiten vorgesehen, können diese getriebetechnisch, insbesondere mittels einer geeigneten Verzahnung, gekoppelt sein. Alternativ oder ergänzend können mehrere Motoren vorgesehen sein, die dann jedoch steuerungstechnisch gekoppelt sein können, insbesondere dann, wenn die mehrere Getriebeeinheiten nicht miteinander getriebetechnisch gekoppelt werden. Insofern können die mehreren Getriebeeinheiten über mehrere zugeordnete Motoren somit auch lediglich steuerungstechnisch gekoppelt sein.

Die gemeinsame Antriebseinrichtung kann eine erste Getriebeeinheit aufweisen, welche ausgebildet ist einen Teil der Antriebsenergie auf die erste Schwingenkoppelstange zu übertragen, und eine von der ersten Getriebeeinheit eigenständige zweite Getriebeeinheit aufweisen, welche ausgebildet ist einen Teil der Antriebsenergie auf die zweite Schwingenkoppelstange zu übertragen, und/oder die weitere Antriebseinrichtung kann eine erste Schwingenkopf-Getriebeeinheit aufweisen, welche ausgebildet ist einen Teil der Antriebsenergie auf den Armausleger zu übertragen, wobei die erste Schwingenkopf-Getriebeeinheit einen gegen die erste Schwingenkoppelstange wirkende erste Drehmomentabstützung aufweist, und kann eine zweite Schwingenkopf-Getriebeeinheit aufweisen, welche ausgebildet ist einen Teil der Antriebsenergie auf den Armausleger zu übertragen, wobei die zweite Schwingenkopf-Getriebeeinheit einen gegen die zweite Schwingenkoppelstange wirkende zweite Drehmomentabstützung aufweist.

Die erste Schwingenkopf-Getriebeeinheit kann demgemäß ein erstes Getriebegehäuse aufweisen, in das eine erste Eingangswelle hineinführt und eine erste Ausgangswelle herausführt, wobei das erste Gehäuse der ersten Schwingenkopf-Getriebeeinheit an dem Schwingenkopf der ersten Schwingenkoppelstange befestigt bzw. angeflanscht ist. An die erste Eingangswelle kann ein erster Motor angeschlossen sein bzw. die erste Eingangswelle kann von einer ersten Motorwelle eines ersten Motors gebildet werden. An die erste Ausgangswelle ist der Armausleger angekoppelt.

Die zweite Schwingenkopf-Getriebeeinheit kann demgemäß ein zweites Getriebegehäuse aufweisen, in das eine zweite Eingangswelle hineinführt und eine zweite Ausgangswelle herausführt, wobei das zweite Gehäuse der zweiten Schwingenkopf-Getriebeeinheit an dem Schwingenkopf der zweiten Schwingenkoppelstange befestigt bzw. angeflanscht ist. An die zweite Eingangswelle kann ein zweiter Motor angeschlossen sein bzw. die zweite Eingangswelle kann von einer zweiten Motorwelle eines zweiten Motors gebildet werden. An die zweite Ausgangswelle ist ebenfalls der Armausleger angekoppelt. Statt eines ersten Motors und eines zweiten Motors kann auch ein einzelner gemeinsamer Motor vorgesehen sein, welcher über eine Getriebeverzweigung Antriebsenergie bzw. ein jeweiliges (Teil-) Drehmoment sowohl in die erste Schwingenkopf-Getriebeeinheit als auch in die zweite Schwingenkopf-Getriebeeinheit einleitet.

Im Falle der gemeinsamen Antriebseinrichtung können die erste Getriebeeinheit und die zweite Getriebeeinheit gekoppelt sein, insbesondere können die erste Getriebeeinheit und die zweite Getriebeeinheit mittels wenigstens einer Zwischengetriebestufe mechanisch gekoppelt sein. In einer einfachen Ausführung kann die Zwischengetriebestufe lediglich von einer Welle gebildet werden, welche die erste Getriebeeinheit und die zweite Getriebeeinheit koppelt, insbesondere ohne, dass die Zwischengetriebestufe eine Übersetzung ins Langsame oder eine Übersetzung ins Schnelle aufweisen würde.

Im Falle der weiteren Antriebseinrichtung können alternativ oder ergänzend auch die erste Schwingenkopf-Getriebeeinheit und die zweite Schwingenkopf-Getriebeeinheit gekoppelt sein, insbesondere können die erste Schwingenkopf-Getriebeeinheit und die zweite Schwingenkopf-Getriebeeinheit mittels wenigstens einer Schwingenkopf-Zwischengetriebestufe mechanisch gekoppelt sein. In einer einfachen Ausführung kann die Schwingenkopf-Zwischengetriebestufe lediglich von einer Welle gebildet werden, welche die erste Schwingenkopf-Getriebeeinheit und die zweite Schwingenkopf-Getriebeeinheit koppelt, insbesondere ohne, dass die Schwingenkopf-Zwischengetriebestufe eine Übersetzung ins Langsame oder eine Übersetzung ins Schnelle aufweisen würde.

Im Falle der gemeinsamen Antriebseinrichtung kann die gemeinsame Antriebseinrichtung, bzw. können insbesondere die erste Getriebeeinheit und die zweite Getriebeeinheit von einem gemeinsamen Motor angetrieben sein. Demgemäß kann der gemeinsame Motor sein Antriebsmoment in beide Getriebeeinheiten einleiten.

Im Falle der weiteren Antriebseinrichtung kann alternativ oder ergänzend auch die weitere Antriebseinrichtung, bzw. können insbesondere die erste Schwingenkopf-Getriebeeinheit und die zweite Schwingenkopf-Getriebeeinheit von einem gemeinsamen Motor angetrieben sein. Demgemäß kann der gemeinsame Motor sein Antriebsmoment in beide Schwingenkopf-Getriebeeinheiten einleiten.

Im Falle der gemeinsamen Antriebseinrichtung kann alternativ zu einem einzigen Motor, die gemeinsame Antriebseinrichtung von zwei separaten Motoren angetrieben sein, insbesondere kann die erste Getriebeeinheit von einem ersten Motor angetrieben sein und die zweite Getriebeeinheit von einem zweiten Motor angetrieben sein.

Im Falle der weiteren Antriebseinrichtung kann alternativ zu einem einzigen Motor, auch die weitere Antriebseinrichtung von zwei separaten Motoren angetrieben sein, insbesondere kann die erste Schwingenkopf-Getriebeeinheit von einem ersten Motor angetrieben sein und die zweite Schwingenkopf-Getriebeeinheit von einem zweiten Motor angetrieben sein.

Die beiden Motoren der gemeinsamen Antriebseinrichtung können steuerungstechnisch gekoppelt angesteuert sein, insbesondere können der erste Motor der ersten Getriebeeinheit und der zweite Motor der zweiten Getriebeeinheit steuerungstechnisch gekoppelt angesteuert sein, und/oder die beiden Motoren der weiteren Antriebseinrichtung können steuerungstechnisch gekoppelt angesteuert sein, insbesondere können der erste Motor der ersten Schwingenkopf-Getriebeeinheit und der zweite Motor der zweiten Schwingenkopf-Getriebeeinheit steuerungstechnisch gekoppelt angesteuert sein.

Die beiden Motoren bzw. der erste Motor und der zweite Motor können steuerungstechnisch derart gekoppelt angesteuert sein, dass jeder Motor jeweils 50% der gesamten Antriebsenergie bereitstellt. Im Falle der Motoren zum schwenkenden Antreiben der Schwinge kann die gesamte zu übertragende Antriebsenergie gegebenenfalls aber auch in unterschiedlichen Teilen auf die erste Schwingenkoppelstange und die zweite Schwingenkoppelstange aufgeteilt werden, wobei jeder Motor dann einen von 50% der gesamten Antriebsenergie abweichenden Anteil an zu übertragender Antriebsenergie bereitstellt.

Im Falle der Motoren zum schwenkenden Antreiben des Armauslegers kann die gesamte zu übertragende Antriebsenergie in gleichen Teilen, d.h. jeweils zu 50% aufgeteilt von den beiden Motoren bereitgestellt und an dem Armausleger zusammengeführt werden. Die gesamte zu übertragende Antriebsenergie kann gegebenenfalls aber auch in unterschiedlichen Teilen durch die beiden Motoren bereitgestellt und an dem Armausleger zusammengeführt werden.

Im Falle der gemeinsamen Antriebseinrichtung kann die gemeinsame Antriebseinrichtung, bzw. können insbesondere die erste Getriebeeinheit und die zweite Getriebeeinheit wenigstens eine Getriebe-Vorstufe, insbesondere wenigstens eine Kegelrad-Getriebe-Vorstufe aufweisen.

Im Falle der weiteren Antriebseinrichtung kann die weitere Antriebseinrichtung, bzw. können insbesondere die erste Schwingenkopf-Getriebeeinheit und die zweite Schwingenkopf-Getriebeeinheit wenigstens eine Getriebe-Vorstufe, insbesondere wenigstens eine Kegelrad-Getriebe-Vorstufe aufweisen.

Die jeweilige Getriebe-Vorstufe, insbesondere die wenigstens eine Kegelrad-Getriebe-Vorstufe der gemeinsamen Antriebseinrichtung und/oder der weiteren Antriebseinrichtung kann eine Übersetzung ins Schnelle aufweisen oder eine Übersetzung ins Langsame aufweisen.

Der ersten Schwingenkoppelstange kann eine erste Gewichtsausgleichsvorrichtung des Roboterarms zugeordnet sein und der zweiten Schwingenkoppelstange kann eine von der ersten Gewichtsausgleichsvorrichtung separate zweite Gewichtsausgleichsvorrichtung des Roboterarms zugeordnet sein.

Dazu kann die erste Schwingenkoppelstange in Nähe ihres ersten Grundlagers wenigstens ein erstes Lagerauge zum Ankoppeln eines vorderen Lagerkopfes der ersten Gewichtsausgleichsvorrichtung aufweisen. In gleicher Weise kann die zweite Schwingenkoppelstange in Nähe ihres zweiten Grundlagers wenigstens ein zweites Lagerauge zum Ankoppeln eines vorderen Lagerkopfes der zweiten Gewichtsausgleichsvorrichtung aufweisen. Der hinter Lagerkopf der ersten Gewichtsausgleichsvorrichtung und der hintere Lagerkopf der zweiten Gewichtsausgleichsvorrichtung werden an weiteren Lageraugen des Karussells angekoppelt bzw. stützen sich an diesen weiteren Lageraugen des Karussells ab. Die erste Gewichtsausgleichsvorrichtung und die zweite Gewichtsausgleichsvorrichtung können identisch ausgebildet sein.

An der ersten Schwingenkoppelstange kann ein Roboter-Kabelsatz entlanggeführt sein und an der zweiten Schwingenkoppelstange kann eine Energiezuführungsleitung entlanggeführt sein.

Der Roboter-Kabelsatz umfasst elektrische Leitungen zum Zuführung elektrischer Energie an die elektrischen Motoren des Roboterarms zum automatischen Antreiben der Konfigurationsgelenke des Roboterarms, sowie zugehörige elektrische Signalleitungen zum Ansteuern der elektrischen Motoren des Roboterarms zum automatischen Antreiben der Konfigurationsgelenke des Roboterarms. Der Roboter-Kabelsatz kann insbesondere in einem inneren Hohlraum der ersten Schwingenkoppelstange entlanggeführt sein.

Die Energiezuführungsleitung kann elektrische Leitungen, hydraulische Leitungen, pneumatische Leitungen und/oder Kühlwasserleitungen umfassen, die zur Versorgung von Werkzeugen benötigt werden, die, je nach Anwendungsfall, an dem Werkzeugflansch des Roboterarms befestigt sind. Die Energiezuführungsleitung kann insbesondere außen an der zweiten Schwingenkoppelstange entlanggeführt sein oder alternativ im Inneren der zweiten Schwingenkoppelstange entlanggeführt sein.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht von vorne einer ersten Ausführungsform eines erfindungsgemäßen Roboterarms mit zwei Schwingenkoppelstangen und jeweils einem Antrieb an dem zweiten Gelenk und an dem dritten Gelenk,
- Fig. 2: eine perspektivische Ansicht von hinten der ersten Ausführungsform des Roboterarms gemäß Fig. 1,
- Fig. 3: eine Seitenansicht von vorne der ersten Ausführungsform des Roboterarms gemäß Fig. 1,
- Fig. 4: eine Schnittdarstellung der ersten Ausführungsform des Roboterarms gemäß Fig. 1,
- Fig. 5: eine perspektivische Ansicht von vorne einer zweiten Ausführungsform eines erfindungsgemäßen Roboterarms mit zwei Schwingenkoppelstangen und jeweils zwei Antrieben an dem zweiten Gelenk und an dem dritten Gelenk,
- Fig. 6: eine perspektivische Ansicht von hinten der zweiten Ausführungsform des Roboterarms gemäß Fig. 5,
- Fig. 7: eine Seitenansicht von vorne der zweiten Ausführungsform des Roboterarms gemäß Fig. 5, und
- Fig. 8: eine perspektivische Ansicht von hinten einer dritten Ausführungsform eines erfindungsgemäßen Roboterarms mit jeweils einem Antrieb, der zwischen den beiden Schwingenkoppelstangen positioniert ist, sowohl an dem zweiten Gelenk als auch an dem dritten Gelenk.

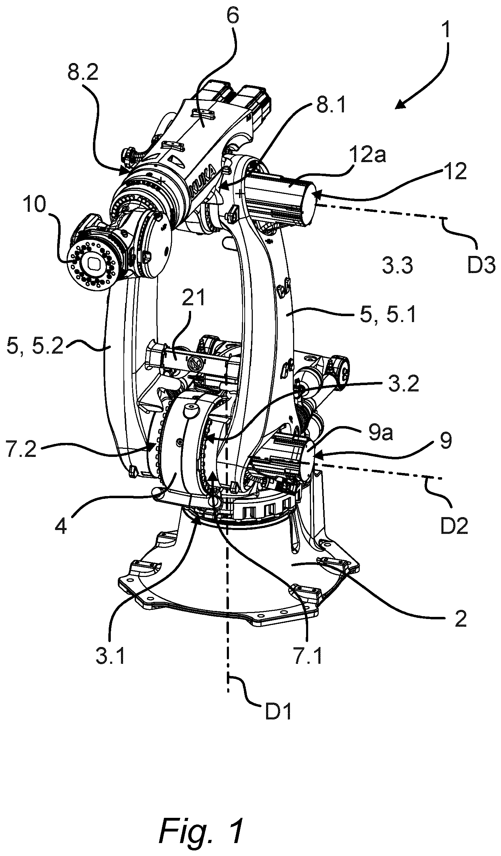

In der Fig. 1 ist eine erste Ausführungsform eines erfindungsgemäßen Roboterarms 1 dargestellt.

Der Roboterarm 1 verfügt in dieser beispielhaften ersten Ausführungsform eine Konfiguration mit sechs Konfigurationsgelenken 3 auf. Der Roboterarm 1 umfasst ein Grundgestell 2, ein am Grundgestell 2 mittels eines ersten Gelenks 3.1 der Konfigurationsgelenke 3 um eine erste Drehachse D1 drehbar gelagertes Karussell 4, ein an dem Karussell 4 mittels eines zweiten Gelenks 3.2 der Konfigurationsgelenke 3 um eine zweite Drehachse D2 schwenkbar gelagerte Schwinge 5 und einen an der Schwinge 5 mittels eines dritten Gelenks 3.3 der Konfigurationsgelenke 3 um eine dritte Drehachse D3 schwenkbar gelagerten Armausleger 6.

Die Schwinge 5 weist erfindungsgemäße zwei zum Positionieren des dritten Gelenks 3.3 im Arbeitsraum des Roboterarms 1 ausgebildete, mechanisch separate Schwingenkoppelstangen 5.1, 5.2 auf, wobei die erste Schwingenkoppelstange 5.1 mittels eines ersten Grundlagers 7.1 an dem Karussell 4 schwenkbar gelagert ist und der Armausleger 6 mittels eines ersten Kopflagers 8.1 an der ersten Schwingenkoppelstange 5.1 gelagert ist, sowie die zweite Schwingenkoppelstange 5.2 mittels eines zweiten Grundlagers 7.2 an dem Karussell 4 schwenkbar gelagert ist und der Armausleger 6 mittels eines zweiten Kopflagers 8.2 an der zweiten Schwingenkoppelstange 5.2 gelagert ist.

Die beiden Schwingenkoppelstangen 5.1, 5.2 sind von einer gemeinsamen Antriebseinrichtung 9 des Roboterarms 1 schwenkbar angetrieben, welche gemeinsame Antriebseinrichtung 9 die über die Schwinge 5 zu führende Antriebsenergie zum Positionieren des dritten Gelenks 3.3 im Arbeitsraum auf die beiden Schwingenkoppelstangen 5.1, 5.2 aufteilt, um den Armausleger 6 relativ zum Karussell 4 zu verstellen.

Als Schwinge 5 wird im Rahmen der vorliegenden Erfindung das mechanische Koppelglied verstanden, welches Antriebskräfte und Antriebsmomente zum Bewegen des Armauslegers 6 überträgt und Lastkräfte und Lastmomente, die durch das Eigengewicht des Armauslegers 6 und eine am Armausleger 6 angebrachte weitere Last durch den Roboterarm 1 abzustützen sind, aufnimmt.

Die weitere Last kann insbesondere ein einem Flansch 10 des Roboterarms 1 befestigtes Werkzeug, wie beispielsweise ein Greifer sein, und gegebenenfalls ein von dem Greifer erfasstes Objekt, und/oder eine am Armausleger 6 entlanggeführt bzw. gelagerte Energiezuführungsvorrichtung 11.

Die beiden erfindungsgemäßen Schwingenkoppelstangen 5.1 und 5.2 bilden insoweit ein Paar von Koppelstangen, die zusammengenommen das mechanische Koppelglied des Roboterarms 1 bildet, welches das zweite Konfigurationsgelenk 3.2 mit dem dritten Konfigurationsgelenk 3.3 verbindet. Die beiden Schwingenkoppelstangen 5.1, 5.2 sind also ausgebildet und eingerichtet die Antriebskräfte und Antriebsmomente zum Bewegen des Armauslegers 6 zu übertragen und Lastkräfte und Lastmomente, die durch das Eigengewicht des Armauslegers 6 und eine am Armausleger 6 angebrachte weitere Last durch den Roboterarm 1 abzustützen sind, aufzunehmen. Die dazu erforderliche Antriebsenergie wird sowohl über die erste Schwingenkoppelstange 5.1 als auch über die zweite Schwingenkoppelstange 5.2 geleitet.

Die erste Schwingenkoppelstange 5.1 und die zweite Schwingenkoppelstange 5.2 sind konstruktiv voneinander unabhängig ausgebildet. Dies bedeutet, dass die in die erste Schwingenkoppelstange 5.1 eingeleitete Antriebsenergie nicht über die zweite Schwingenkoppelstange 5.2 weiterleitbar ist und umgekehrt die in die zweite Schwingenkoppelstange 5.2 eingeleitete Antriebsenergie nicht über die erste Schwingenkoppelstange 5.1 weiterleitbar ist. Demgemäß weisen die erste Schwingenkoppelstange 5.1 und die zweite Schwingenkoppelstange 5.2 keinen direkten mechanischen Verbindungsbereich auf, insbesondere keinen direkten starren Verbindungsglieder auf. Die erste Schwingenkoppelstange 5.1 und die zweite Schwingenkoppelstange 5.2 sind demgemäß auch nicht einteilig ausgebildet, sondern mechanisch stets separat voneinander, insbesondere zweiteilig ausgebildet.

Der Armausleger 6 ist von einer weiteren Antriebseinrichtung 12 des Roboterarms 1 an der Schwinge 5 schwenkbar angetrieben. Die weitere Antriebseinrichtung 12 überträgt ihre Antriebsenergie zum Positionieren des Armauslegers 6 auf den Armausleger 6, um den Armausleger 6 relativ zur Schwinge 5 und relativ zum Karussell 4 zu verstellen.

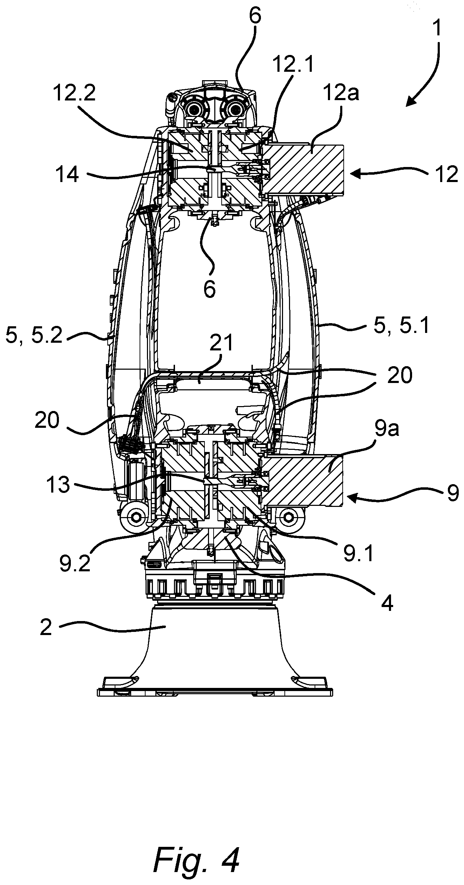

Wie insbesondere in Fig. 4 näher dargestellt ist, weist die gemeinsame Antriebseinrichtung 9 in diesem Ausführungsbeispiel eine erste Getriebeeinheit 9.1 auf, welche ausgebildet ist einen Teil der Antriebsenergie auf die erste Schwingenkoppelstange 5.1 zu übertragen, und eine von der ersten Getriebeeinheit 9.1 eigenständige zweite Getriebeeinheit 9.2 auf, welche ausgebildet ist einen Teil der Antriebsenergie auf die zweite Schwingenkoppelstange 5.2 zu übertragen.

Auch die weitere Antriebseinrichtung 12 weist in diesem Ausführungsbeispiel eine erste Schwingenkopf-Getriebeeinheit 12.1 auf, welche ausgebildet ist einen Teil der Antriebsenergie auf den Armausleger 6 zu übertragen, wobei die erste Schwingenkopf-Getriebeeinheit 12.1 einen gegen die erste Schwingenkoppelstange 5.1 wirkende erste Drehmomentabstützung aufweist. Die weitere Antriebseinrichtung 12 weist außerdem eine zweite Schwingenkopf-Getriebeeinheit 12.2 auf, welche ausgebildet ist einen Teil der Antriebsenergie auf den Armausleger 6 zu übertragen, wobei die zweite Schwingenkopf-Getriebeeinheit 12.2 einen gegen die zweite Schwingenkoppelstange 5.2 wirkende zweite Drehmomentabstützung aufweist.

Im Falle des vorliegenden Ausführungsbeispiels sind die erste Getriebeeinheit 9.1 und die zweite Getriebeeinheit 9.2 mechanisch gekoppelt, und zwar mittels wenigstens einer Zwischengetriebestufe 13. In dieser Ausführung ist die Zwischengetriebestufe 13 lediglich eine Welle, welche die erste Getriebeeinheit 9.1 und die zweite Getriebeeinheit 9.2 koppelt, insbesondere ohne, dass die Zwischengetriebestufe 13 eine Übersetzung ins Langsame oder eine Übersetzung ins Schnelle aufweisen würde. Die Zwischengetriebestufe 13 kann insoweit eine bloße Welle sein. Die Welle kann in eine Motorwelle eines Motors 9a integriert sein bzw. einteilig mit dieser ausgebildet sein.

In gleicher Weise können die erste Schwingenkopf-Getriebeeinheit 12.1 und die zweite Schwingenkopf-Getriebeeinheit 12.2 gekoppelt sein, insbesondere mittels wenigstens einer Schwingenkopf-Zwischengetriebestufe 14 mechanisch gekoppelt sein. In der gezeigten Ausführung ist die Schwingenkopf-Zwischengetriebestufe 14 lediglich eine Welle, welche die erste Schwingenkopf-Getriebeeinheit 12.1 und die zweite Schwingenkopf-Getriebeeinheit 12.2 koppelt, insbesondere ohne, dass die Zwischengetriebestufe 14 eine Übersetzung ins Langsame oder eine Übersetzung ins Schnelle aufweisen würde. Die Zwischengetriebestufe 14 kann insoweit eine bloße Welle sein. Die Welle kann in eine Motorwelle eines Motors 12a integriert sein bzw. einteilig mit dieser ausgebildet sein.

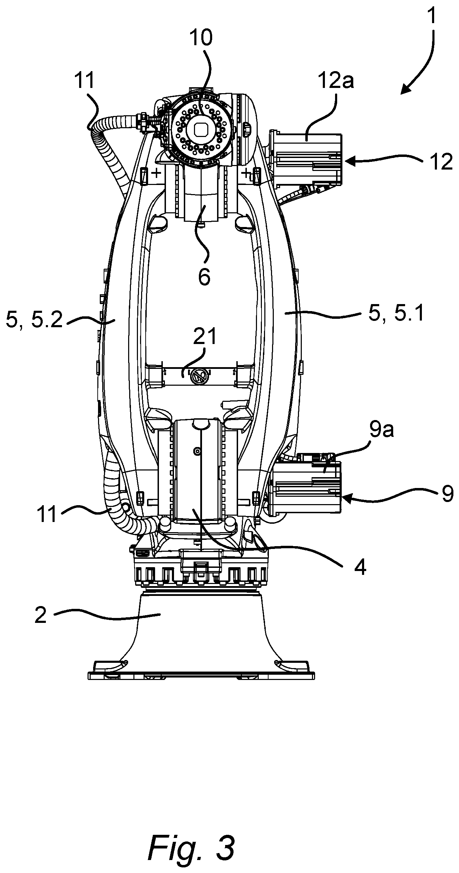

Wie in der Ausführungsform gemäß Fig. 1 bis Fig. 4 dargestellt ist, kann die gemeinsame Antriebseinrichtung 9, insbesondere können die erste Getriebeeinheit 9.1 und die zweite Getriebeeinheit 9.2 von einem einzigen gemeinsamen Motor 9a angetrieben sein, und/oder die weitere Antriebseinrichtung 12, insbesondere können die erste Schwingenkopf-Getriebeeinheit 12.1 und die zweite Schwingenkopf-Getriebeeinheit 12.2 von einem gemeinsamen Motor 12a angetrieben sein.

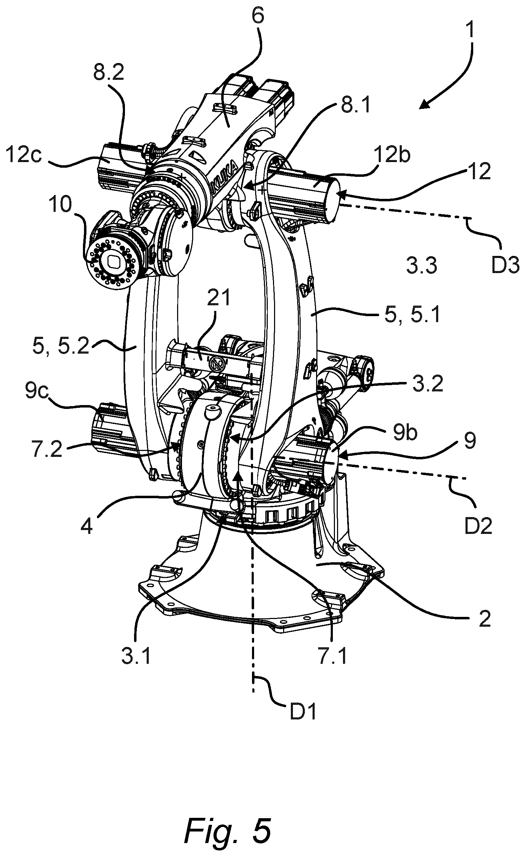

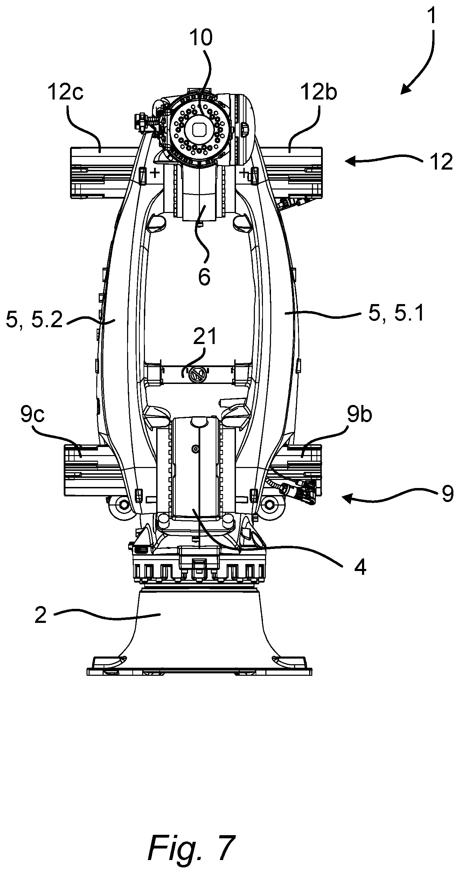

Wie in der alternativen Ausführungsform gemäß Fig. 5 bis Fig. 7 dargestellt ist, kann die gemeinsame Antriebseinrichtung 9 aber auch von zwei separaten Motoren 9b und 9c angetrieben sein, insbesondere die erste Getriebeeinheit 9.1 von einem ersten Motor 9b angetrieben sein und die zweite Getriebeeinheit 9.2 von einem zweiten Motor 9c angetrieben sein.

In gleicher Weise kann dann auch die weitere Antriebseinrichtung 12 von zwei separaten Motoren 12b und 12c angetrieben sein, insbesondere die erste Schwingenkopf-Getriebeeinheit 12.1 von einem ersten Motor 12b angetrieben sein und die zweite Schwingenkopf-Getriebeeinheit 12.2 von einem zweiten Motor 12c angetrieben sein.

Die beiden Motoren 9b und 9c der gemeinsamen Antriebseinrichtung 9 können dann steuerungstechnisch gekoppelt angesteuert sein, insbesondere können der erste Motor 9b der ersten Getriebeeinheit 9.1 und der zweite Motor 9c der zweiten Getriebeeinheit 9.2 steuerungstechnisch gekoppelt angesteuert sein.

Demgemäß können auch die beiden Motoren 12b und 12c der weiteren Antriebseinrichtung 12 steuerungstechnisch gekoppelt angesteuert sein, insbesondere können der erste Motor 12b der ersten Schwingenkopf-Getriebeeinheit 12.1 und der zweite Motor 12c der zweiten Schwingenkopf-Getriebeeinheit 12.2 steuerungstechnisch gekoppelt angesteuert sein.

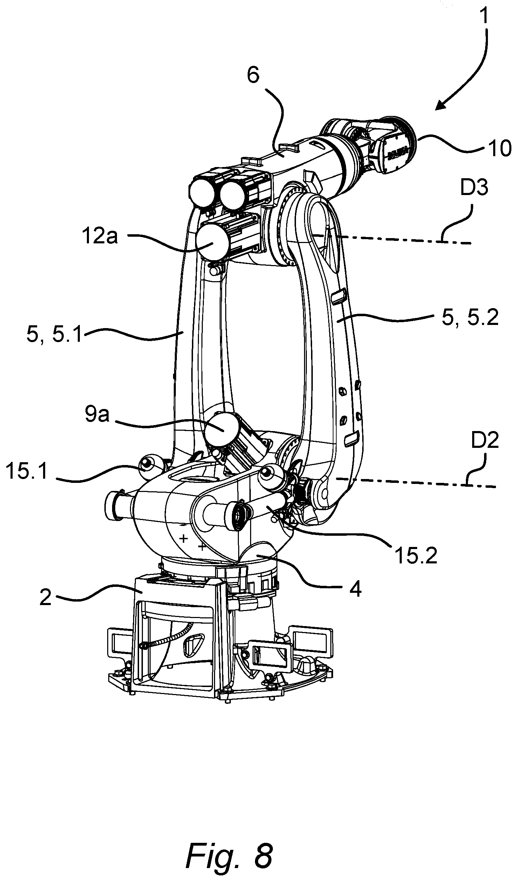

Die gemeinsame Antriebseinrichtung 9, insbesondere die erste Getriebeeinheit 9.1 und die zweite Getriebeeinheit 9.2 können wenigstens eine Getriebe-Vorstufe, insbesondere wenigstens eine Kegelrad-Getriebe-Vorstufe aufweisen, derart, dass der Motor 9a, wie beispielsweise in Fig. 8 dargestellt ist, mit seiner Motorwelle rechtwinkelig zu den Getriebe-Eingangswellen der ersten Getriebeeinheit 9.1 und der zweiten Getriebeeinheit 9.2 bzw. rechtwinkelig zur Drehachse D2 angeordnet sein kann.

In gleicher Weise kann die weitere Antriebseinrichtung 12, insbesondere die erste Schwingenkopf-Getriebeeinheit 12.1 und die zweite Schwingenkopf-Getriebeeinheit 12.1 wenigstens eine Getriebe-Vorstufe, insbesondere wenigstens eine Kegelrad-Getriebe-Vorstufe aufweisen, derart, dass der Motor 12a, wie beispielsweise ebenfalls in Fig. 8 dargestellt ist, mit seiner Motorwelle rechtwinkelig zu den Getriebe-Eingangswellen der ersten Schwingenkopf-Getriebeeinheit 12.1 und der zweiten Schwingenkopf-Getriebeeinheit 12.2 bzw. rechtwinkelig zur Drehachse D3 angeordnet sein kann.

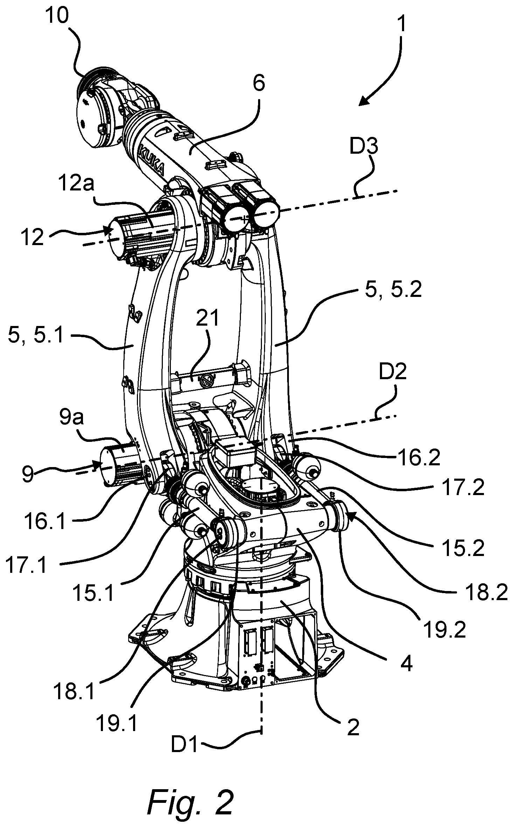

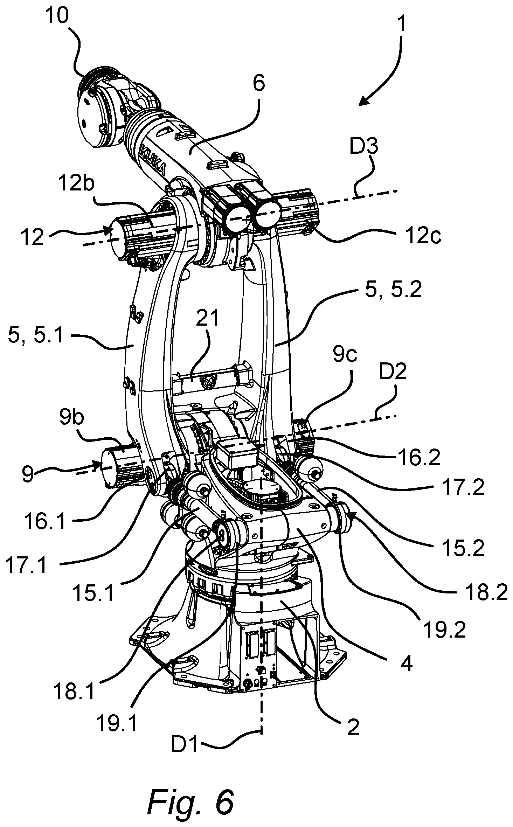

Wie insbesondere in Fig. 2 und Fig. 6 deutlich erkennbar ist, kann der ersten Schwingenkoppelstange 5.1 eine erste Gewichtsausgleichsvorrichtung 15.1 des Roboterarms 1 zugeordnet sein und der zweiten Schwingenkoppelstange 5.2 kann eine von der ersten Gewichtsausgleichsvorrichtung 15.1 separate zweite Gewichtsausgleichsvorrichtung 15.2 des Roboterarms 1 zugeordnet sein.

Dazu weist in den vorliegenden Ausführungsbeispielen die erste Schwingenkoppelstange 5.1 in Nähe ihres ersten Grundlagers 7.1 wenigstens ein erstes Lagerauge 16.1 zum Ankoppeln eines vorderen Lagerkopfes 17.1 der ersten Gewichtsausgleichsvorrichtung 15.1 auf. In gleicher Weise weist die zweite Schwingenkoppelstange 5.2 in Nähe ihres zweiten Grundlagers 7.2 wenigstens ein zweites Lagerauge 16.2 zum Ankoppeln eines vorderen Lagerkopfes 17.2 der zweiten Gewichtsausgleichsvorrichtung 15.2 auf. Der hintere Lagerkopf 18.1 der ersten Gewichtsausgleichsvorrichtung 15.1 und der hintere Lagerkopf 18.2 der zweiten Gewichtsausgleichsvorrichtung 15.2 werden an weiteren Lageraugen 19.1 und 19.2 des Karussells 4 angekoppelt bzw. stützen sich an diesen weiteren Lageraugen 19.1 und 19.2 des Karussells 4 ab. Die erste Gewichtsausgleichsvorrichtung und die zweite Gewichtsausgleichsvorrichtung können identisch ausgebildet sein.

Im Inneren der ersten Schwingenkoppelstange 5.1 kann ein Roboter-Kabelsatz 20 entlanggeführt sein, wie dies beispielsweise in Fig. 4 gezeigt ist. Gegebenenfalls kann ein Kabelkanal 21 zwischen der ersten Schwingenkoppelstange 5.1 und der zweiten Schwingenkoppelstange 5.2 angeordnet sein, in dem der Roboter-Kabelsatz 20 beispielsweise nahe des Karussells 4 des Roboterarms 1 vom Inneren der zweiten Schwingenkoppelstange 5.2 ausgehend über den Kabelkanal 21 hinweg in das Innere der ersten Schwingenkoppelstange 5.1 hinübergeführt ist. Der Kabelkanal 21 kann beispielsweise aus Kunststoff hergestellt sein und ist konstruktiv nicht dazu ausgelegt Antriebskräfte übertragen zu können.

## Patentansprüche

1. Roboterarm, aufweisend die Konfiguration des Roboterarms (1) bestimmende mehrere Konfigurationsgelenke (3), ein Grundgestell (2), ein am Grundgestell (2) mittels eines ersten Gelenks (3.1) der Konfigurationsgelenke (3) um eine erste Drehachse (D1) drehbar gelagertes Karussell (4), ein an dem Karussell (4) mittels eines zweiten Gelenks (3.2) der Konfigurationsgelenke (3) um eine zweite Drehachse (D2) schwenkbar gelagerte Schwinge (5) und einen an der Schwinge (5) mittels eines dritten Gelenks (3.3) der Konfigurationsgelenke (3) um eine dritte Drehachse (D3) schwenkbar gelagerten Armausleger (6), wobei die Schwinge (5) zwei zum Positionieren des dritten Gelenks (3.3) im Arbeitsraum des Roboterarms (1) ausgebildete Schwingenkoppelstangen (5.1, 5.2) aufweist, wobei die erste Schwingenkoppelstange (5.1) mittels eines ersten Grundlagers (7.1) an dem Karussell (4) schwenkbar gelagert ist und der Armausleger (6) mittels eines ersten Kopflagers (8.1) an der ersten Schwingenkoppelstange (5.1) gelagert ist, sowie die zweite Schwingenkoppelstange (5.2) mittels eines zweiten Grundlagers (7.2) an dem Karussell (4) schwenkbar gelagert ist und der Armausleger (6) mittels eines zweiten Kopflagers (8.2) an der zweiten Schwingenkoppelstange (5.2) gelagert ist, und die beiden Schwingenkoppelstangen (5.1, 5.2) von einer gemeinsamen Antriebseinrichtung (9) des Roboterarms (1) schwenkbar angetrieben sind, welche gemeinsame Antriebseinrichtung (9) die über die Schwinge (5) zu führende Antriebsenergie zum Positionieren des dritten Gelenks (3.3) im Arbeitsraum auf die beiden Schwingenkoppelstangen (5.1, 5.2) aufteilt, um den Armausleger (6) relativ zum Karussell (4) zu verstellen , **dadurch gekennzeichnet, dass** die zwei Schwingenkoppelstangen mechanisch separat sind.

2. Roboterarm nach Anspruch 1, **dadurch gekennzeichnet, dass** der Armausleger (6) von einer weiteren Antriebseinrichtung (12) des Roboterarms (1) an der Schwinge (5) schwenkbar angetrieben ist, welche weitere Antriebseinrichtung (12) ihre Antriebsenergie zum Positionieren des Armauslegers (6) auf den Armausleger (6) überträgt, um den Armausleger (6) relativ zur Schwinge (5) zu verstellen.

3. Roboterarm nach Anspruch 1 oder 2, **dadurch gekennzeichnet, dass** die gemeinsame Antriebseinrichtung (9) eine erste Getriebeeinheit (9.1) aufweist, welche ausgebildet ist einen Teil der Antriebsenergie auf die erste Schwingenkoppelstange (5.1) zu übertragen, und eine von der ersten Getriebeeinheit (9.1) eigenständige zweite Getriebeeinheit (9.2) aufweist, welche ausgebildet ist einen Teil der Antriebsenergie auf die zweite Schwingenkoppelstange (5.2) zu übertragen, und/oder die weitere Antriebseinrichtung (12) eine erste Schwingenkopf-Getriebeeinheit (12.1) aufweist, welche ausgebildet ist einen Teil der Antriebsenergie auf den Armausleger (6) zu übertragen, wobei die erste Schwingenkopf-Getriebeeinheit (12.1) einen gegen die erste Schwingenkoppelstange (5.1) wirkende erste Drehmomentabstützung aufweist, und eine zweite Schwingenkopf-Getriebeeinheit (12.2) aufweist, welche ausgebildet ist einen Teil der Antriebsenergie auf den Armausleger (6) zu übertragen, wobei die zweite Schwingenkopf-Getriebeeinheit (12.2) einen gegen die zweite Schwingenkoppelstange (5.2) wirkende zweite Drehmomentabstützung aufweist.

4. Roboterarm nach Anspruch 3, **dadurch gekennzeichnet, dass** die erste Getriebeeinheit (9.1) und die zweite Getriebeeinheit (9.2) gekoppelt sind, insbesondere die erste Getriebeeinheit (9.1) und die zweite Getriebeeinheit (9.2) mittels wenigstens einer Zwischengetriebestufe (13) mechanisch gekoppelt sind, und/oder die erste Schwingenkopf-Getriebeeinheit (12.1) und die zweite Schwingenkopf-Getriebeeinheit (12.2) gekoppelt sind, insbesondere die erste Schwingenkopf-Getriebeeinheit (12.1) und die zweite Schwingenkopf-Getriebeeinheit (12.2) mittels wenigstens einer Schwingenkopf-Zwischengetriebestufe (14) mechanisch gekoppelt sind.

5. Roboterarm nach einem der Ansprüche 1 bis 4, **dadurch gekennzeichnet, dass** die gemeinsame Antriebseinrichtung (9), insbesondere die erste Getriebeeinheit (9.1) und die zweite Getriebeeinheit (9.2) von einem gemeinsamen Motor (9a) angetrieben sind, und/oder die weitere Antriebseinrichtung (12), insbesondere die erste Schwingenkopf-Getriebeeinheit (12.1) und die zweite Schwingenkopf-Getriebeeinheit (12.2) von einem gemeinsamen Motor (12a) angetrieben sind.

6. Roboterarm nach einem der Ansprüche 1 bis 4, **dadurch gekennzeichnet, dass** die gemeinsame Antriebseinrichtung (9) von zwei separaten Motoren (9b, 9c) angetrieben sind, insbesondere die erste Getriebeeinheit (9.1) von einem ersten Motor (9b) angetrieben ist und die zweite Getriebeeinheit (9.2) von einem zweiten Motor (9c) angetrieben ist, und/oder die weitere Antriebseinrichtung (12) von zwei separaten Motoren (12b, 12c) angetrieben sind, insbesondere die erste Schwingenkopf-Getriebeeinheit (12.1) von einem ersten Motor (12b) angetrieben ist und die zweite Schwingenkopf-Getriebeeinheit (12.2) von einem zweiten Motor (12c) angetrieben ist.

7. Roboterarm nach Anspruch 6, **dadurch gekennzeichnet, dass** die beiden Motoren (9b, 9c) der gemeinsamen Antriebseinrichtung (9) steuerungstechnisch gekoppelt angesteuert sind, insbesondere der erste Motor (9b) der ersten Getriebeeinheit (9.1) und der zweite Motor (9c) der zweiten Getriebeeinheit (9.2) steuerungstechnisch gekoppelt angesteuert sind, und/oder die beiden Motoren (12b, 12c) der weiteren Antriebseinrichtung (12) steuerungstechnisch gekoppelt angesteuert sind, insbesondere der erste Motor (12b) der ersten Schwingenkopf-Getriebeeinheit (12.1) und der zweite Motor (12c) der zweiten Schwingenkopf-Getriebeeinheit (12.2) steuerungstechnisch gekoppelt angesteuert sind.

8. Roboterarm nach einem der Ansprüche 1 bis 7, **dadurch gekennzeichnet, dass** die gemeinsame Antriebseinrichtung (9), insbesondere die erste Getriebeeinheit (9.1) und die zweite Getriebeeinheit (9.2) wenigstens eine Getriebe-Vorstufe, insbesondere wenigstens eine Kegelrad-Getriebe-Vorstufe aufweist, und/oder die weitere Antriebseinrichtung (12), insbesondere die erste Schwingenkopf-Getriebeeinheit (12.1) und die zweite Schwingenkopf-Getriebeeinheit (12.2) wenigstens eine Getriebe-Vorstufe, insbesondere wenigstens eine Kegelrad-Getriebe-Vorstufe aufweist.

9. Roboterarm nach einem der Ansprüche 1 bis 8, **dadurch gekennzeichnet, dass** der ersten Schwingenkoppelstange (5.1) eine erste Gewichtsausgleichsvorrichtung des Roboterarms (1) zugeordnet ist und der zweiten Schwingenkoppelstange (5.2) eine von der ersten Gewichtsausgleichsvorrichtung separate zweite Gewichtsausgleichsvorrichtung des Roboterarms (1) zugeordnet ist.

10. Roboterarm nach einem der Ansprüche 1 bis 9, **dadurch gekennzeichnet, dass** an der ersten Schwingenkoppelstange (5.1) ein Roboter-Kabelsatz entlanggeführt ist und an der zweiten Schwingenkoppelstange (5.2) eine Energiezuführungsleitung (11) entlanggeführt ist.

## Claims

1. Robot arm having multiple configuration joints (3) that determine the configuration of the robot arm (1), having a base framework (2), having a carousel (4) which is mounted on the base framework (2) so as to be rotatable about a first axis of rotation (D1) by means of a first joint (3.1) of the configuration joints (3), having a swing arm (5) which is mounted on the carousel (4) so as to be pivotable about a second axis of rotation (D2) by means of a second joint (3.2) of the configuration joints (3), and having an arm extension (6) which is mounted on the swing arm (5) so as to be pivotable about a third axis of rotation (D3) by means of a third joint (3.3) of the configuration joints (3),
wherein the swing arm (5) has two swing-arm coupling bars (5.1, 5.2) which are configured for positioning the third joint (3.3) in the working space of the robot arm (1), wherein the first swing-arm coupling bar (5.1) is mounted pivotably on the carousel (4) by means of a first base bearing (7.1) and the arm extension (6) is mounted on the first swing-arm coupling bar (5.1) by means of a first head bearing (8.1), and the second swing-arm coupling bar (5.2) is mounted pivotably on the carousel (4) by means of a second base bearing (7.2) and the arm extension (6) is mounted on the second swing-arm coupling bar (5.2) by means of a second head bearing (8.2), and the two swing-arm coupling bars (5.1, 5.2) are driven pivotably by a common drive device (9) of the robot arm (1), which common drive device (9) divides between the two swing-arm coupling bars (5.1, 5.2) the drive energy to be guided via the swing-arm (5) and serving for positioning the third joint (3.3) in the working space, in order to adjust the arm extension (6) relative to the carousel (4), **characterized in that** the two swing-arm coupling bars are mechanically separate.

2. Robot arm according to Claim 1, **characterized in that** the arm extension (6) is driven pivotably by a further drive device (12) of the robot arm (1) at the swing arm (5), which further drive device (12) transmits its drive energy for positioning the arm extension (6) to the arm extension (6) in order to adjust the arm extension (6) relative to the swing arm (5).

3. Robot arm according to Claim 1 or 2, **characterized in that** the common drive device (9) has a first transmission unit (9.1), which is configured to transmit a part of the drive energy to the first swing-arm coupling bar (5.1), and a second transmission unit (9.2), which is independent of the first transmission unit (9.1) and is configured to transmit a part of the drive energy to the second swing-arm coupling bar (5.2), and/or the further drive device (12) has a first swing-arm-head transmission unit (12.1), which is configured to transmit a part of the drive energy to the arm extension (6), the first swing-arm-head transmission unit (12.1) having a first torque support acting counter to the first swing-arm coupling bar (5.1), and a second swing-arm-head transmission unit (12.2), which is configured to transmit a part of the drive energy to the arm extension (6), the second swing-arm-head transmission unit (12.2) having a second torque support acting counter to the second swing-arm coupling bar (5.2).

4. Robot arm according to Claim 3, **characterized in that** the first transmission unit (9.1) and the second transmission unit (9.2) are coupled, in particular the first transmission unit (9.1) and the second transmission unit (9.2) are coupled mechanically by means of at least one intermediate transmission stage (13), and/or the first swing-arm-head transmission unit (12.1) and the second swing-arm-head transmission unit (12.2) are coupled, in particular the first swing-arm-head transmission unit (12.1) and the second swing-arm-head transmission unit (12.2) are coupled mechanically by means of at least one swing-arm-head intermediate transmission stage (14).

5. Robot arm according to one of Claims 1 to 4, **characterized in that** the common drive device (9), in particular the first transmission unit (9.1) and the second transmission unit (9.2), are driven by a common motor (9a), and/or the further drive device (12), in particular the first swing-arm-head transmission unit (12.1) and the second swing-arm-head transmission unit (12.2), are driven by a common motor (12a).

6. Robot arm according to one of Claims 1 to 4, **characterized in that** the common drive device (9) is driven by two separate motors (9b, 9c), in particular the first transmission unit (9.1) is driven by a first motor (9b) and and the second transmission unit (9.2) is driven by a second motor (9c), and/or the further drive device (12) is driven by two separate motors (12b, 12c), in particular the first swing-arm-head transmission unit (12.1) is driven by a first motor (12b) and the second swing-arm-head transmission unit (12.2) is driven by a second motor (12c).

7. Robot arm according to Claim 6, **characterized in that** the two motors (9b, 9c) of the common drive device (9) are controlled in a manner coupled in terms of control, in particular the first motor (9b) of the first transmission unit (9.1) and the second motor (9c) of the second transmission unit (9.2) are controlled in a manner coupled in terms of control, and/or the two motors (12b, 12c) of the further drive device (12) are controlled in a manner coupled in terms of control, in particular the first motor (12b) of the first swing-arm-head transmission unit (12.1) and the second motor (12c) of the second swing-arm-head transmission unit (12.2) are controlled in a manner coupled in terms of control.

8. Robot arm according to one of Claims 1 to 7, **characterized in that** the common drive device (9), in particular the first transmission unit (9.1) and the second transmission unit (9.2), have at least one transmission preliminary stage, in particular at least one bevel-gear-transmission preliminary stage, and/or the further drive device (12), in particular the first swing-arm-head transmission unit (12.1) and the second swing-arm-head transmission unit (12.2), have at least one transmission preliminary stage, in particular at least one bevel-gear-transmission preliminary stage.

9. Robot arm according to one of Claims 1 to 8, **characterized in that** the first swing-arm coupling bar (5.1) is assigned a first weight-compensation device of the robot arm (1), and the second swing-arm coupling bar (5.2) is assigned a second weight-compensation device, separate from the first weight-compensation device, of the robot arm (1).

10. Robot arm according to one of Claims 1 to 9, **characterized in that** a robot cable set is routed along the first swing-arm coupling bar (5.1), and an energy supply line (11) is routed along the second swing-arm coupling bar (5.2).

## Revendications

1. Bras de robot, possédant plusieurs articulations de configuration (3) qui déterminent la configuration du bras de robot (1), un châssis de base (2), un carrousel (4) monté sur le châssis de base (2) au moyen d'une première articulation (3.1) des articulations de configuration (3) de manière à pouvoir effectuer une rotation autour d'un premier axe de rotation (D1), un bras oscillant (5) monté sur le carrousel (4) au moyen d'une deuxième articulation (3.2) des articulations de configuration (3) de manière à pouvoir pivoter autour d'un deuxième axe de rotation (D2) et un avant-bras (6) monté sur le bras oscillant (5) au moyen d'une troisième articulation (3.3) des articulations de configuration (3) de manière à pouvoir pivoter autour d'un troisième axe de rotation (D3),
le bras oscillant (5) possédant deux barres d'accouplement oscillantes (5.1, 5.2) configurées pour positionner la troisième articulation (3.3) dans l'espace de travail du bras de robot (1), la première barre d'accouplement oscillante (5.1) étant montée de manière pivotante sur le carrousel (4) au moyen d'un premier palier principal (7.1) et l'avant-bras (6) étant monté sur la première barre d'accouplement oscillante (5.1) au moyen d'une première crapaudine supérieure (8.1), et la deuxième barre d'accouplement oscillante (5.2) étant montée de manière pivotante sur le carrousel (4) au moyen d'un deuxième palier principal (7.2) et l'avant-bras (6) étant monté sur la deuxième barre d'accouplement oscillante (5.2) au moyen d'une deuxième crapaudine supérieure (8.2), et les deux barres d'accouplement oscillantes (5.1, 5.2) étant entraînées de manière pivotante par un dispositif d'entraînement commun (9) du bras de robot (1), lequel dispositif d'entraînement commun (9) répartit l'énergie d'entraînement, servant au positionnement de la troisième articulation (3.3) dans l'espace de travail, à amener par le biais du bras oscillant (5) sur les deux barres d'accouplement oscillantes (5.1, 5.2), afin de déplacer l'avant-bras (6) par rapport au carrousel (4), **caractérisé en ce que** les deux barres d'accouplement oscillantes sont mécaniquement séparées.

2. Bras de robot selon la revendication 1, **caractérisé en ce que** l'avant-bras (6) est entraîné de manière pivotante par un dispositif d'entraînement supplémentaire (12) du bras de robot (1) au niveau du bras oscillant (5), lequel dispositif d'entraînement supplémentaire (12) transmet son énergie d'entraînement, servant au positionnement de l'avant-bras articulé (6), à l'avant-bras (6) afin de déplacer l'avant-bras (6) par rapport au bras oscillant (5).

3. Bras de robot selon la revendication 1 ou 2, **caractérisé en ce que** le dispositif d'entraînement commun (9) possède une première unité d'engrenage (9.1), laquelle est configurée pour transmettre une partie de l'énergie d'entraînement à la première barre d'accouplement oscillante (5.1), et possède une deuxième unité d'engrenage (9.2) indépendante de la première unité d'engrenage (9.1), laquelle est configurée pour transmettre une partie de l'énergie d'entraînement à la deuxième barre d'accouplement oscillante (5.2), et/ou le dispositif d'entraînement supplémentaire (12) possède une première unité d'engrenage à tête oscillante (12.1), laquelle est configurée pour transmettre une partie de l'énergie d'entraînement à l'avant-bras (6), la première unité d'engrenage à tête oscillante (12.1) possédant un premier support de couple agissant contre la première barre d'accouplement oscillante (5.1), et une deuxième unité d'engrenage à tête oscillante (12.2), laquelle est configurée pour transmettre une partie de l'énergie d'entraînement à l'avant-bras (6), la deuxième unité d'engrenage à tête oscillante (12.2) possédant un deuxième support de couple agissant contre la deuxième barre d'accouplement oscillante (5.2).

4. Bras de robot selon la revendication 3, **caractérisé en ce que** la première unité d'engrenage (9.1) et la deuxième unité d'engrenage (9.2) sont accouplées, en particulier la première unité d'engrenage (9.1) et la deuxième unité d'engrenage (9.2) sont accouplées mécaniquement au moyen d'au moins un étage d'engrenage intermédiaire (13), et/ou la première unité d'engrenage à tête oscillante (12.1) et la deuxième unité d'engrenage à tête oscillante (12.2) sont accouplées, en particulier la première unité d'engrenage à tête oscillante (12.1) et la deuxième unité de transmission à tête oscillante (12.2) sont accouplées mécaniquement au moyen d'au moins un étage de transmission intermédiaire à tête oscillante (14).

5. Bras de robot selon l'une des revendications 1 à 4, **caractérisé en ce que** le dispositif d'entraînement commun (9), en particulier la première unité d'engrenage (9.1) et la deuxième unité d'engrenage (9.2), sont entraînés par un moteur commun (9a), et/ou le dispositif d'entraînement supplémentaire (12), en particulier la première unité d'engrenage à tête oscillante (12.1) et la deuxième unité d'engrenage à tête oscillante (12.2), sont entraînées par un moteur commun (12a).

6. Bras de robot selon l'une des revendications 1 à 4, **caractérisé en ce que** le dispositif d'entraînement commun (9) est entraîné par deux moteurs séparés (9b, 9c), en particulier la première unité d'engrenage (9.1) est entraînée par un premier moteur (9b) et la deuxième unité d'engrenage (9.2) est entraînée par un deuxième moteur (9c), et/ou le dispositif d'entraînement supplémentaire (12) est entraîné par deux moteurs séparés (12b, 12c), en particulier la première unité d'engrenage à tête oscillante (12.1) est entraînée par un premier moteur (12b) et la deuxième unité d'engrenage à tête oscillante (12.2) est entraînée par un deuxième moteur (12c).

7. Bras de robot selon la revendication 6, **caractérisé en ce que** les deux moteurs (9b, 9c) du dispositif d'entraînement commun (9) sont commandés en étant accouplés par technique de commande, en particulier le premier moteur (9b) de la première unité d'engrenage (9.1) et le deuxième moteur (9c) de la deuxième unité d'engrenage (9.2) sont commandées en étant accouplées par technique de commande, et/ou les deux moteurs (12b, 12c) du dispositif d'entraînement supplémentaire (12) sont commandés en étant accouplés par technique de commande, en particulier le premier moteur (12b) de la première unité d'engrenage à tête oscillante (12.1) et le deuxième moteur (12c) de la deuxième unité d'engrenage à tête oscillante (12.2) sont commandés en étant accouplés par technique de commande.

8. Bras de robot selon l'une des revendications 1 à 7, **caractérisé en ce que** le dispositif d'entraînement commun (9), en particulier la première unité d'engrenage (9.1) et la deuxième unité d'engrenage (9.2), possède au moins un étage d'entrée d'engrenage, en particulier au moins un étage d'entrée d'engrenage à pignon conique, et/ou le dispositif d'entraînement supplémentaire (12), en particulier la première unité d'engrenage à tête oscillante (12.1) et la deuxième unité d'engrenage à tête oscillante (12.2), possède au moins un étage d'entrée d'engrenage, en particulier au moins un étage d'entrée d'engrenage à pignon conique.

9. Bras de robot selon l'une des revendications 1 à 8, **caractérisé en ce qu'**un premier dispositif d'équilibrage du poids du bras de robot (1) est associé à la première barre d'accouplement oscillante (5.1) et qu'un deuxième dispositif d'équilibrage du poids du bras de robot (1), séparé du premier dispositif d'équilibrage du poids, est associé à la deuxième barre d'accouplement oscillante (5.2).

10. Bras de robot selon l'une des revendications 1 à 9, **caractérisé en ce qu'**un jeu de câbles de robot est guidé le long de la première barre d'accouplement oscillante (5.1) et qu'une ligne d'alimentation en énergie (11) est guidée le long de la deuxième barre d'accouplement oscillante (5.2).
